# DEMANDE DE BREVET EUROPEEN

(11) **EP 4 607 738 A1**
(43) Date de publication de la demande: **27.08.2025**
(21) Numéro de dépôt: 25158683.0
(22) Date de dépôt: 18.02.2025
(51) Int. Cl.: H02J 3/38, H02J 13/00

(54) **PROCÉDÉ MIS EN OEUVRE DANS UN RÉSEAU DE TÉLÉCOMMUNICATION ET UNITÉS ÉLECTRONIQUES ASSOCIÉES**

(30) Priorité: 20.02.2024 FR 2401670
(71) Demandeur: FONDATION B-COM, 35510 Cesson-Sévigné (FR)
(72) Inventeur: LUCIDARME, Thierry, 35450 LIVRE-SUR-CHANGEON (FR)
(74) Mandataire: Jacobacci Coralis Harle

(57) **Abrégé**

Dans un réseau de télécommunication (4) comprenant au moins une infrastructure de gestion (2) alimentée électriquement par au moins un fournisseur d'énergie électrique (6) à travers un réseau électrique (8), un procédé comprend les étapes suivantes :
- réception, par une unité électronique (10 ; 20) reliée au réseau de télécommunication (4), de données représentatives de la répartition, par type de source d'énergie de production, de la puissance électrique produite par le fournisseur d'énergie électrique (6) ou disponible sur le réseau électrique (8) ;
- test, par l'unité électronique (10 ; 20), d'au moins une condition relative à ladite répartition ;
- lorsque ladite au moins une condition est vérifiée, adaptation du fonctionnement de l'unité électronique (10 ; 20) ou d'une autre unité électronique (20) reliée au réseau de télécommunication (4).

Des unités électroniques correspondantes sont également décrites.

## Description

### Domaine technique de l'invention

La présente invention concerne le domaine technique des réseaux de télécommunication.

Elle concerne en particulier un procédé mis en oeuvre dans un réseau de télécommunication, ainsi que des unités électroniques associées.

### Etat de la technique

Les réseaux de télécommunication sont couramment utilisés de nos jours pour mettre en relation des équipements utilisateurs (tels que des téléphones cellulaires) conçus pour établir une liaison avec le réseau de télécommunication concerné.

Dans le cadre des réseaux de téléphonie mobile, il a été proposé (par exemple dans le rapport technique 3GPP TR 23.700-66 V0.2.0) de faire connaître à certaines entités du réseau des informations relatives à la consommation énergétique, notamment des informations relatives aux émissions de CO₂ et aux énergies renouvelables.

### Présentation de l'invention

Dans ce contexte, l'invention propose un procédé mis en oeuvre dans un réseau de télécommunication comprenant au moins une infrastructure de gestion alimentée électriquement par au moins un fournisseur d'énergie électrique à travers un réseau électrique, ce procédé comprenant les étapes suivantes :
- réception, par une unité électronique reliée au réseau de télécommunication, de données représentatives de la répartition, par type de source d'énergie de production, de la puissance électrique produite par le fournisseur d'énergie électrique ou disponible sur le réseau électrique ;
- test, par l'unité électronique, d'au moins une condition relative à ladite répartition ;
- lorsque ladite au moins une condition est vérifiée, adaptation du fonctionnement de l'unité électronique ou d'une autre unité électronique reliée au réseau de télécommunication.

Le fonctionnement de l'unité électronique peut ainsi être adapté en fonction de la répartition (parfois dénommée *"mix énergétique"*) définie dans les données représentatives, en adoptant par exemple une configuration moins consommatrice d'énergie lorsque les énergies fossiles ou non-renouvelables sont trop sollicitées.

L'unité électronique peut être un équipement utilisateur conçu pour établir une liaison radio avec le réseau de télécommunication.

L'étape d'adaptation peut dans ce cas être une étape d'adaptation de cette unité électronique.

Dans un mode de réalisation envisageable, le procédé peut comprendre les étapes suivantes :
- réception, par l'unité électronique, d'autres données représentatives d'une autre répartition, par type de source d'énergie de production, d'une puissance électrique alimentant au moins en partie un autre réseau de télécommunication ;
- connexion de l'unité électronique au réseau de télécommunication ou à l'autre réseau de télécommunication en fonction de ladite répartition et de ladite autre répartition.

Selon d'autres possibilités de réalisation (éventuellement combinables) :
- les bandes de fréquences utilisables par l'unité électronique pour établir ladite liaison radio peuvent être déterminées en fonction de ladite répartition ;
- l'unité électronique peut déterminer la tranche de réseau à travers laquelle elle accède au réseau de télécommunication en fonction de ladite répartition ;
- la puissance d'émission maximale de l'unité électronique peut être modifiée en fonction de ladite répartition ;
- les services disponibles pour exécution par l'unité électronique peuvent être déterminés en fonction de ladite répartition.

Les données représentatives peuvent être reçues par l'unité électronique au sein d'un bloc d'informations système.

L'unité électronique peut par ailleurs être équipée d'un module d'identification d'abonné ; ce module d'identification d'abonné peut dans ce cas mémoriser des données indicatives de ladite au moins une condition.

L'unité électronique peut être une unité d'infrastructure du réseau de télécommunication.

Une telle unité électronique peut par exemple être conçue pour établir une liaison radio avec au moins un équipement utilisateur.

Le procédé peut dans ce cas comprendre les étapes suivantes :
- établissement, par l'unité électronique et en fonction de ladite répartition, d'une liste de tranches de réseau utilisables par l'équipement utilisateur ;
- transmission de ladite liste de l'unité électronique à l'équipement utilisateur.

L'équipement utilisateur peut alors être conçu pour sélectionner une tranche d'accès au réseau parmi les tranches de réseau de la liste. L'équipement utilisateur peut ainsi accéder au réseau de télécommunication à travers la tranche de réseau sélectionnée.

Autrement dit, l'unité électronique peut être conçue pour, lorsque ladite au moins une condition est vérifiée, transmettre à l'autre unité électronique des données entraînant une adaptation du fonctionnement de l'autre unité électronique.

Selon d'autres possibilités de réalisation, qui peuvent être combinées avec les précédentes :
- l'adaptation peut comprendre le report de l'exécution d'une tâche lorsque ladite au moins une condition est vérifiée ;
- ladite tâche peut être une mise à jour d'un composant logiciel de l'unité électronique ;
- l'adaptation peut comprendre la sélection d'un algorithme prédéfini pour mettre en oeuvre une fonctionnalité donnée ;
- l'adaptation peut comprendre une modification de la localisation, au sein du réseau de télécommunication, de caches utilisés par des équipements utilisateurs reliés au réseau de télécommunication.

Ladite au moins une condition est par exemple vérifiée lorsque ladite répartition indique une part de puissance électrique provenant d'énergies fossiles supérieure à un seuil prédéterminé. Selon une autre possibilité de réalisation, ladite au moins une condition est vérifiée lorsque ladite répartition indique une part de puissance électrique d'origine éolienne (ou une augmentation de cette part) supérieure à un seuil prédéterminé.

Par ailleurs, lesdites données représentatives peuvent être émises par un serveur associé au fournisseur d'énergie électrique ou au réseau électrique. Lesdites données représentatives peuvent par ailleurs être transmises par l'intermédiaire d'une architecture de fonctionnement, d'opération et de maintenance associée au réseau de télécommunication et/ou par l'intermédiaire d'au moins une fonction de gestion du réseau de télécommunication.

L'invention propose également une unité électronique comprenant :
- un module de communication configuré pour établir une liaison avec un réseau de télécommunication comprenant au moins une infrastructure de gestion alimentée électriquement par au moins un fournisseur d'énergie électrique à travers un réseau électrique, et pour recevoir des données représentatives de la répartition, par type de source d'énergie de production, de la puissance électrique produite par le fournisseur d'énergie électrique ou disponible sur le réseau électrique ; et
- un module d'adaptation configuré pour tester au moins une condition relative à ladite répartition et pour adapter, lorsque ladite au moins une condition est vérifiée, le fonctionnement de l'unité électronique.

Comme déjà indiqué, cette unité électronique peut être un équipement utilisateur ; le module de communication peut être configuré pour établir une liaison radio avec le réseau de télécommunication.

L'invention propose également une unité électronique comprenant :
- un module de communication configuré pour établir une liaison avec un réseau de télécommunication comprenant au moins une infrastructure de gestion alimentée électriquement par au moins un fournisseur d'énergie électrique à travers un réseau électrique, et pour recevoir des données représentatives de la répartition, par type de source d'énergie de production, de la puissance électrique produite par le fournisseur d'énergie électrique ou disponible sur le réseau électrique ; et
- un module d'adaptation configuré pour tester au moins une condition relative à ladite répartition et pour commander, lorsque ladite au moins une condition est vérifiée, la transmission (par exemple au moyen d'une unité de communication distincte du module de communication précité), à une autre unité électronique reliée au réseau de télécommunication, de données entraînant une adaptation du fonctionnement de cette autre unité électronique.

Cette autre unité électronique peut être par exemple un équipement utilisateur ayant établi une liaison radio avec l'unité de communication précitée.

### Description détaillée de l'invention

De plus, diverses autres caractéristiques de l'invention ressortent de la description annexée effectuée en référence aux dessins qui illustrent des formes, non limitatives, de réalisation de l'invention et où :
- la figure 1 est un schéma d'un exemple de contexte dans lequel peut être mise en oeuvre l'invention ;
- la figure 2 est un logigramme présentant un premier exemple de procédé conforme à l'invention ;
- la figure 3 est un logigramme présentant un second exemple de procédé conforme à l'invention ;
- la figure 4 est un logigramme présentant un troisième exemple de procédé conforme à l'invention ; et
- la figure 5 est un logigramme présentant un quatrième exemple de procédé conforme à l'invention.

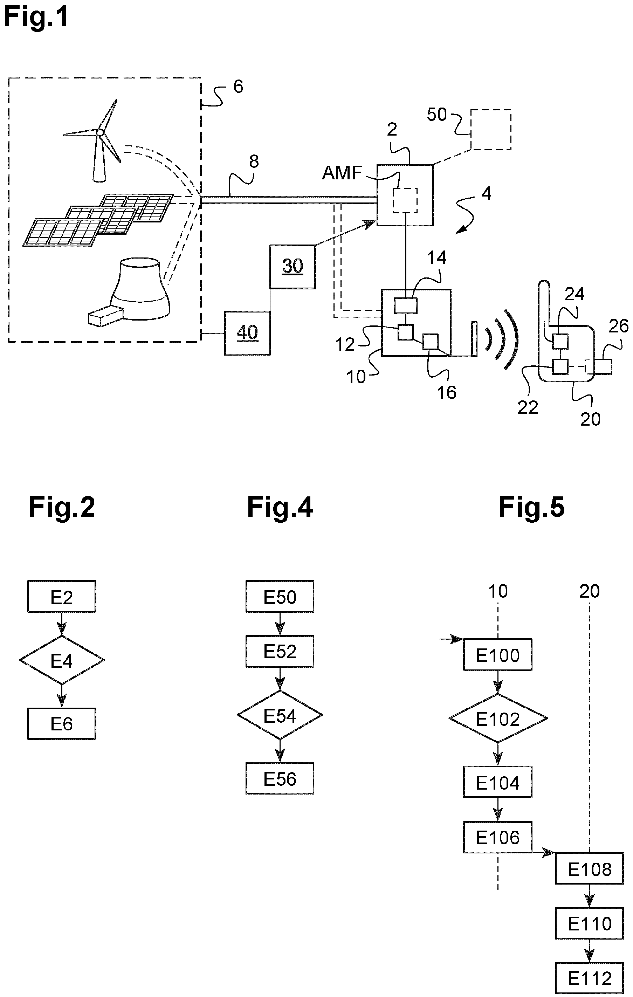

La figure 1 représente un exemple de contexte dans lequel peut être mise en oeuvre l'invention.

Une infrastructure de gestion 2 d'un réseau de télécommunication 4 est alimentée électriquement par un fournisseur d'énergie électrique 6 à travers un réseau électrique 8.

Comme schématiquement représenté sur la figure 1, la puissance électrique fournie par le fournisseur d'énergie électrique 6 peut être produite au moyen de diverses sources d'énergie.

Les sources d'énergie de production de la puissance électrique sont usuellement classées en différents types, ou filières de production, par exemple : pétrole, gaz, nucléaire, solaire, hydraulique, éolien.

Selon une variante envisageable, plusieurs fournisseurs d'énergie électrique pourraient alimenter électriquement le réseau électrique 8.

L'infrastructure de gestion 2 est par exemple un coeur de réseau (ou dorsale, ou encore *"core network"* selon l'appellation anglo-saxonne).

On décrit ici un exemple de réalisation de l'invention utilisable dans le cadre de la norme de téléphonie mobile 5G. Dans ce contexte, le coeur de réseau est un coeur de réseau 5G. L'invention n'est toutefois pas limitée à ce contexte et peut s'appliquer à d'autres réseaux de télécommunication que ceux conçus en conformité à la norme 5G.

L'infrastructure de gestion 2 est conçue pour mettre en oeuvre différentes fonctions de gestion du réseau de télécommunication 4, notamment une fonction AMF d'accès et de gestion de la mobilité (en anglais "Access *and Mobility Management Function"*)*.*

Le réseau de télécommunication 4 inclut également un réseau d'accès radio qui comprend une unité d'infrastructure 10, ici une station de base (de type gNodeB dans le contexte de la norme 5G utilisé ici à titre d'exemple).

Dans certains modes de réalisation, l'unité d'infrastructure 10 est elle aussi alimentée électriquement au moyen du réseau électrique 8, comme représenté schématiquement sur la figure 1. En variante toutefois, l'unité d'infrastructure 10 pourrait être alimentée par un autre fournisseur d'énergie électrique et/ou au moyen d'un autre réseau électrique.

Le réseau d'accès radio, et en particulier l'unité d'infrastructure 10, est conçu(e) pour établir une liaison radio avec des équipements utilisateur présents dans la portée de l'unité d'infrastructure 10. On a représenté sur la figure 1 un seul tel équipement utilisateur 20, qui sera décrit plus en détail dans la suite.

L'unité d'infrastructure 10 comprend un processeur 12, une première unité de communication 14 et une seconde unité de communication 16.

Le fonctionnement de l'unité d'infrastructure 10 (notamment tel que décrit plus bas) est par exemple mis en oeuvre du fait de l'exécution d'instructions de programme d'ordinateur par le processeur 12 (ces instructions pouvant être mémorisées dans une mémoire reliée au processeur 12).

La première unité de communication 14 est conçue pour établir une liaison avec le coeur de réseau 2. Dans le cadre de la norme 5G, cette liaison est l'interface N2 entre le réseau d'accès radio et la fonction AMF susmentionnée.

La seconde unité de communication 16 est conçue établir la liaison radio déjà mentionnée avec l'équipement utilisateur 20.

L'équipement utilisateur 20 comprend un processeur 22, un module de communication 24 et un module d'identification d'abonné 26.

Le fonctionnement de l'équipement utilisateur 20 (notamment tel que décrit plus bas) est par exemple mis en oeuvre du fait de l'exécution d'instructions de programme d'ordinateur par le processeur 22 (ces instructions pouvant être mémorisées dans une mémoire reliée au processeur 22).

Le module de communication 24 est conçu pour établir la liaison radio déjà mentionnée entre l'unité d'infrastructure 10 (précisément la seconde unité de communication 16) et l'équipement utilisateur 20, c'est-à-dire une liaison radio avec le réseau de télécommunication 4.

Le module d'identification d'abonné 26 mémorise des données d'authentification permettant à l'équipement utilisateur de se connecter au réseau de télécommunication 4 et de pouvoir ainsi échanger des données avec d'autres équipements connectés au réseau de télécommunication 4.

Le module d'identification d'abonné 26 peut être mis en oeuvre en pratique au moyen d'une carte à microcircuit (amovible et qui peut être insérée dans un lecteur adapté de l'équipement utilisateur 20), ou d'un circuit intégré équipant l'équipement utilisateur 20 et mémorisant les données d'authentification précitées.

Une architecture de fonctionnement, d'opération et de maintenance 30 (ou architecture OAM pour *"Operation, Administration and Maintenance"*) associée au réseau de télécommunication 4 effectue divers paramétrages de l'infrastructure de gestion 2 (ici du coeur de réseau, et en particulier des différentes fonctions mises en oeuvre dans ce coeur de réseau) de manière à assurer le bon fonctionnement du réseau de télécommunication 4 et à faire évoluer le fonctionnement du réseau de télécommunication 4 selon les choix de l'opérateur de télécommunications concerné.

Enfin, un serveur 40 associé au fournisseur d'énergie électrique 6 prépare et peut ainsi émettre des données représentatives de la répartition, par type de source d'énergie de production, de la puissance électrique produite par le fournisseur d'énergie électrique 6.

En variante, le serveur 40 pourrait être associé au réseau électrique 8 et pourrait alors préparer et émettre des données représentatives de la répartition, par type de source d'énergie de production, de la puissance électrique disponible sur le réseau électrique 8. Dans ce cas, ces données représentatives peuvent être par exemple préparées (c'est-à-dire ici notamment synthétisées) par le gestionnaire du réseau électrique 8 sur la base d'informations fournies par les différents acteurs (fournisseurs d'énergie électrique) alimentant électriquement le réseau électrique 8.

Selon une possibilité de réalisation, ces données représentatives comprennent, pour chaque type de source d'énergie de production, le pourcentage de la puissance totale (produite par le producteur d'énergie 6 ou disponible sur le réseau électrique 8) qui est produit grâce à une source d'énergie de ce type. Autrement dit, ces données représentatives comprennent, pour chaque type de source d'énergie de production, le poids relatif de la puissance électrique produite par ce type de source d'énergie dans la puissance électrique totale produite par le fournisseur d'énergie électrique 6 ou disponible sur le réseau électrique 8.

Lorsque les différents types utilisés sont pétrole, gaz, nucléaire, solaire, hydraulique, éolien, les données représentatives sont par exemple une chaîne de caractères (telle que par exemple : O5G5N70S10H5W5), où le nombre suivant la lettre O correspond au pourcentage de puissance électrique produit par combustion de pétrole, le nombre suivant la lettre G correspond au pourcentage de puissance électrique produit par combustion de gaz, le nombre suivant la lettre N correspond au pourcentage de puissance électrique d'origine nucléaire, le nombre suivant la lettre S correspond au pourcentage de puissance électrique d'origine solaire, le nombre suivant la lettre H correspond au pourcentage de puissance électrique d'origine hydraulique, et le nombre suivant la lettre W correspond au pourcentage de puissance électrique d'origine éolienne.

Autrement dit, les données représentatives sont par exemple formées par une chaîne de caractères comprenant, pour chaque type de source d'énergie de production, c'est-à-dire pour chaque filière, une lettre identifiant le type d'énergie de production concerné suivie d'un nombre représentant le poids relatif de la puissance électrique produite par ce type de source d'énergie dans la puissance électrique totale produite par le fournisseur d'énergie électrique 6 ou disponible sur le réseau électrique 8.

Selon une possibilité de réalisation, les types d'énergie considérés sont : énergies renouvelables et énergies non-renouvelables.

Les données représentatives peuvent alors comprendre une donnée représentative de la part de puissance électrique produite à partir d'énergies renouvelables dans la puissance électrique totale produite par le fournisseur d'énergie électrique 6 ou disponible sur le réseau électrique 8, et/ou une donnée représentative de la part de puissance électrique produite à partir d'énergies non-renouvelables dans la puissance électrique totale produite par le fournisseur d'énergie électrique 6 ou disponible sur le réseau électrique 8.

La figure 2 est un logigramme présentant un premier exemple de procédé conforme à l'invention.

Ce procédé débute par une étape E2 de transmission des données représentatives mentionnées ci-dessus du serveur 40 à une unité électronique reliée au réseau de télécommunication 4. Les données représentatives sont donc reçues par cette unité électronique à l'étape E2.

Cette unité électronique peut être l'équipement utilisateur 20 (auquel cas c'est en pratique le module de communication 24 qui reçoit les données représentatives), l'unité d'infrastructure (ici une station de base) 10 (auquel cas c'est en pratique la première unité de communication 14 qui reçoit les données représentatives), ou une unité électronique de l'infrastructure de gestion (ici le coeur de réseau) 2, par exemple une unité électronique mettant en oeuvre la fonction AMF déjà mentionnée.

La transmission des données représentatives s'effectue par exemple par l'intermédiaire de l'architecture de fonctionnement, d'opération et de maintenance 30 et éventuellement par l'intermédiaire d'une ou plusieurs fonction(s) de gestion du réseau de télécommunication 4 (fonction de gestion mise en oeuvre par l'infrastructure de gestion 2 comme déjà indiqué).

Le procédé de la figure 2 se poursuit par une étape E4 de test, par l'unité électronique, d'au moins une condition relative à la répartition représentée par les données représentatives reçues.

Ce test comprend par exemple la détermination si la part de puissance électrique provenant d'énergies fossiles (part indiquée par les données représentatives) est supérieure à un seuil prédéterminé (par exemple compris entre 5 % et 40 %, ici 30 %).

Si la condition testée est vérifiée (ou, le cas échéant, les conditions testées sont vérifiées), le procédé comprend alors une étape E6 d'adaptation du fonctionnement de l'unité électronique.

Dans l'exemple mentionné ci-dessus, le fonctionnement de l'unité électronique est adapté (notamment comme proposé ci-dessous) dans le cas où la part de la puissance électrique provenant d'énergies fossiles est supérieure au seuil prédéterminé (et seulement dans ce cas).

Selon une autre possibilité de réalisation, le fonctionnement de l'unité électronique est adapté (notamment comme proposé ci-dessous) dans le cas où la part de puissance électrique provenant d'énergies non renouvelables est supérieure à un seuil prédéfini (et seulement dans ce cas).

Selon encore une autre possibilité de réalisation, le fonctionnement de l'unité électronique est adapté (notamment comme proposé ci-dessous) dans le cas où la part de puissance électrique provenant d'énergies renouvelables est inférieure à un seuil prédéfini (et seulement dans ce cas).

L'adaptation du fonctionnement de l'unité électronique peut comprendre par exemple le report de l'exécution d'une tâche par l'unité électronique. Cette tâche reportée peut être une tâche de gestion interne du fonctionnement de l'unité électronique, une tâche de calcul effectuée par l'unité électronique ou une mise à jour d'un composant logiciel de l'unité électronique.

Le report de la tâche est par exemple actif tant que la condition testée comme indiqué ci-dessus est vérifiée.

L'adaptation du fonctionnement de l'unité électronique peut comprendre (en variante ou en combinaison avec ce qui a été indiqué) la sélection d'un algorithme prédéfini pour mettre en oeuvre une fonctionnalité donnée.

Par exemple, si un premier algorithme cryptographique et un second algorithme cryptographique sont disponibles pour effectuer un traitement (ou fonctionnalité) cryptographique donné, et si l'utilisation du second algorithme cryptographique entraîne une consommation électrique (consommation énergétique) inférieure à celle résultant de l'utilisation du premier algorithme cryptographique, l'adaptation du fonctionnement de l'unité électronique peut comprendre la sélection du second algorithme cryptographique (le second algorithme cryptographique pouvant en revanche être sous-optimal pour d'autres critères, tel que par exemple la rapidité d'exécution).

L'adaptation du fonctionnement de l'unité électronique peut comprendre (en variante ou en combinaison avec ce qui a déjà été indiqué) une modification de la localisation, au sein du réseau de télécommunication, de caches utilisés par des équipements utilisateurs reliés au réseau de télécommunication. Les techniques d'informatique en périphérie (ou *"edge computing"* selon la dénomination anglo-saxonne souvent utilisée) prévoient la localisation de caches au plus près des utilisateurs. Cet aspect du fonctionnement du réseau de télécommunication 4 peut être adapté lorsque la condition testée est vérifiée.

Dans les exemples qui viennent d'être décrits, l'adaptation du fonctionnement de l'unité électronique permet une consommation électrique réduite, adaptée aux circonstances décrites par les données représentatives.

C'est ce qui est recherché dans le cas où le test effectué par l'unité électronique indique une situation défavorable, dans laquelle on cherche à réduire la consommation électrique.

L'invention n'est toutefois pas limitée à ce type de fonctionnement : on peut au contraire prévoir que le test effectué par l'unité électronique détermine si la situation est favorable (en vérifiant par exemple si la part de puissance électrique provenant d'énergies fossiles est inférieure à un seuil prédéfini, ou si la part de puissance électrique provenant d'énergies renouvelables est supérieur à un seuil prédéfini), et, si la condition testée est vérifiée, adapter le fonctionnement de l'unité électronique, par exemple en effectuant une tâche particulière (telle qu'une mise à jour d'un composant logiciel de l'unité électronique).

Selon encore une autre possibilité de réalisation, le test peut porter sur la part relative à un type particulier de source d'énergie de production afin d'en déduire une potentielle situation (par exemple météorologique) particulière. On peut tester par exemple la part de puissance électrique d'origine éolienne relativement à la puissance électrique totale (ou l'augmentation de cette part) et, en cas de dépassement d'un seuil, adapter le fonctionnement d'une ou plusieurs unités électroniques reliées au réseau de télécommunication 4 afin de leur affecter plus de ressources pour aider la gestion d'une tempête potentielle.

D'autres exemples d'adaptation du fonctionnement de l'unité électronique sont par ailleurs donnés dans la suite de la description.

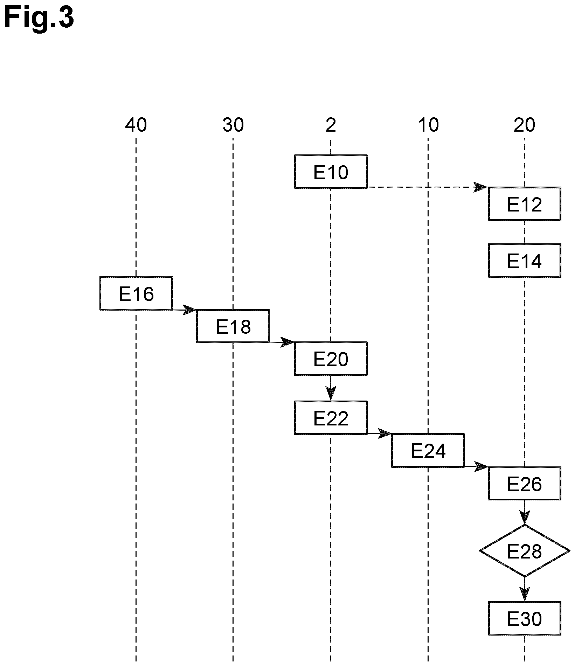

La figure 3 est un logigramme présentant un second exemple de procédé conforme à l'invention.

Le procédé de la figure 3 débute par une première étape préliminaire E10 de transmission de données de définition qui définissent au moins une condition. Ces données de définition sont ici transmises de l'infrastructure de gestion 2 à l'équipement utilisateur 20. Ces données de définition peuvent être transmises parmi des données du plan de commande (ou *"control plane"* selon l'appellation anglo-saxonne), par exemple par l'intermédiaire de la fonction AMF et de l'interface N1 entre cette fonction AMF et l'équipement utilisateur 20.

Le procédé comprend alors une seconde étape préliminaire E12 au cours de laquelle les données de définition sont reçues par l'équipement utilisateur 20 et mémorisées au sein du module d'identification d'abonné 26. Cette étape E12 est par exemple mise en oeuvre du fait de l'exécution d'un applicatif dédié par le processeur 22.

Les étapes préliminaires E10 et E12 sont optionnelles. En variante, les données de définition pourraient être mémorisées dans le module d'identification d'abonné 26 lors de la fabrication de celui-ci (cas d'un module d'identification d'abonné physique) ou lors de son téléchargement (cas d'un module d'identification d'abonné logiciel).

Comme cela ressortira de la description qui suit, les données de définition définissent au moins une condition relative à la répartition de la puissance électrique par type de source d'énergie de production, condition qui est utilisée ultérieurement dans le présent procédé.

On considère qu'à une phase du fonctionnement de l'équipement utilisateur 20 (étape E14), cet équipement utilisateur 20 a établi au moyen du module de communication 24 une liaison radio avec l'unité d'infrastructure 10, avec les caractéristiques suivantes :
- le module de communication 24 est conçu pour émettre des ondes électromagnétiques avec une première puissance maximale d'émission (qui correspond par exemple à une puissance nominale d'émission) ;
- le processeur 22 (ou, en variante, le module de communication 24) est conçu pour sélectionner une bande de fréquence utilisée pour la liaison radio parmi un ensemble initial de bandes de fréquence (défini par exemple par la norme utilisée) ;
- le processeur 22 (ou, en variante, le module de communication 24) est conçu pour sélectionner une tranche de réseau (ou *"network slice"* selon l'appellation anglo-saxonne) parmi un ensemble initial de tranches de réseau disponibles (défini par exemple par l'unité d'infrastructure 10 et/ou signalé au sein d'un message reçu par l'équipement utilisateur 20 en provenance de cette unité d'infrastructure 10).

Le procédé de la figure 3 comprend ensuite une étape E16 de transmission, du serveur 40 à l'architecture 30, de données représentatives de la répartition, par type de source d'énergie de production, de la puissance électrique produite par le fournisseur d'énergie électrique 6.

Ces données représentatives sont ensuite transmises lors d'une étape E18 de l'architecture 30 à l'infrastructure de gestion 2.

L'infrastructure de gestion 2 reçoit donc les données représentatives à l'étape E20.

On décrit ici le cas de données représentatives de la répartition, par type de source d'énergie de production, de la puissance électrique produite par le fournisseur d'énergie électrique 6. Toutefois, comme déjà indiqué, les données représentatives reçues par l'infrastructure de gestion 2 pourraient en variante représenter la répartition, par type de source d'énergie de production, de la puissance électrique disponible sur le réseau électrique 8 (auquel cas ces données représentatives auraient été produites par un gestionnaire du réseau électrique 8 comme déjà expliqué).

Lors d'une étape E22, les données représentatives sont transmises de l'infrastructure de gestion 2 (ici en particulier depuis la fonction AMF) à l'unité d'infrastructure 10 (ici une station de base ayant établi une communication avec l'équipement utilisateur 20). Dans l'exemple décrit ici, la transmission des données représentatives entre la fonction AMF et l'unité d'infrastructure 10 (qui fait partie du réseau d'accès radio) est réalisée via l'interface N2.

L'unité d'infrastructure 10 peut alors transmettre à l'étape E24 les données représentatives à l'équipement utilisateur 20, ici via la liaison radio établie entre la station de base (utilisée en tant qu'unité d'infrastructure 10) et l'équipement utilisateur 20. Les données représentatives sont par exemple transmises au sein d'un bloc d'information système (transmis de l'unité d'infrastructure, ici la station de base 10, à l'équipement utilisateur 20), tel qu'un bloc de type SIBn (avec n compris entre 1 et 20), par exemple au sein du bloc SIB1.

En variante, les données représentatives pourraient être transmises de l'infrastructure de gestion 2 (par exemple depuis la fonction AMF) à l'équipement utilisateur 20 via un canal de communication (tel que l'interface N1 déjà mentionnée) établi entre l'infrastructure de gestion 2 (ici la fonction AMF) et l'équipement utilisateur 20, par exemple au sein d'un message NAS (pour *"Non Access Stratum"*)*.* Ce canal de communication passe physiquement par l'unité d'infrastructure 10 mais les données transmises dans le canal de communication ne sont pas accessibles par l'unité d'infrastructure 10.

L'équipement utilisateur 20 (c'est-à-dire en pratique le module de communication 24) reçoit les données représentatives à l'étape E26.

L'équipement utilisateur 20 procède alors à un test (étape E28) pour déterminer si les données représentatives reçues vérifient la condition définie par les données de définition (mémorisées, dans le présent exemple, dans le module d'identification d'abonné 26).

Lors de cette étape de test E28, le processeur 22 de l'équipement utilisateur 20 effectue par exemple une comparaison entre certaines au moins des données représentatives reçues et certaines au moins des données de définition de manière à déterminer si les données représentatives reçues vérifient la condition précitée.

Par exemple, le processeur 22 compare la part de puissance électrique provenant d'énergies fossiles (part indiquée par les données représentatives) à un seuil défini par les données de définition et considère ici que la condition est vérifiée si la part de puissance électrique provenant d'énergies fossiles est supérieure à ce seuil.

En variante, le processeur 22 pourrait comparer la part de puissance électrique provenant d'énergies non-renouvelables à un seuil défini par les données de définition, et considérer par exemple que la condition est vérifiée si la part de puissance électrique provenant d'énergie non-renouvelables est supérieure à ce seuil.

Selon une autre variante, le processeur 22 pourrait comparer la part de puissance électrique provenant d'énergies renouvelables à un seuil défini par les données de définition, et considérer par exemple que la condition est vérifiée si la part de puissance électrique provenant d'énergie renouvelables est inférieure à ce seuil.

Lorsque le processeur 22 détermine que les données représentatives reçues vérifient la condition précitée, le processeur 22 commande à l'étape E30 une adaptation du fonctionnement de l'équipement utilisateur 20.

Le processeur 22 configure par exemple à l'étape E30 le module de communication 24 de sorte que la puissance émise (c'est-à-dire la puissance des ondes électromagnétiques émises) par le module de communication 24 soit inférieure à une seconde puissance maximale d'émission (cette seconde puissance maximale d'émission étant strictement inférieure à la première puissance maximale d'émission précédemment utilisée). Cette seconde puissance maximale d'émission peut être prédéfinie, ou, en variante, déterminée en fonction d'une partie au moins des données représentatives, par exemple en fonction d'une différence entre la part de puissance électrique provenant d'énergies fossiles (ou, le cas échéant, non-renouvelables) et le seuil mentionné plus haut.

La puissance d'émission maximale de l'équipement utilisateur 20 peut ainsi être modifiée en fonction de la répartition définie dans les données représentatives reçues.

Lors de l'étape E30, le processeur 22 peut également déterminer un ensemble restreint de bandes de fréquences que pourra utiliser le module de communication 24 pour établir la liaison radio avec le réseau de télécommunication 4 (ici précisément avec l'unité d'infrastructure 10). Cet ensemble restreint de bandes de fréquence comprend une ou plusieurs bande(s) de fréquence de l'ensemble initial de bandes de fréquence, mais n'inclut pas au moins une bande de fréquence de l'ensemble initial (jugée trop consommatrice d'énergie lorsque la condition est vérifiée).

L'ensemble restreint de bandes de fréquence comprend par exemple une ou plusieurs bande(s) de fréquence dont le spectre est situé (en totalité) en-dessous de 1 GHz (une ou plusieurs bande(s) de fréquence dont le spectre est situé au moins en partie au-dessus de 1 GHz étant dans ce cas exclue(s) de l'ensemble restreint).

Autrement dit, le processeur 22 interdit l'utilisation par l'équipement utilisateur 20 (en pratique par le module de communication 24) d'au moins une bande de fréquence (pourtant comprise dans l'ensemble initial de bandes de fréquence et/ou utilisable d'après les normes en vigueur), par exemple une bande de fréquence dont le spectre est au moins en partie situé au-dessus de 1 GHz.

Les bandes de fréquences utilisables par l'équipement utilisateur 20 pour établir la liaison radio avec le réseau de télécommunication 4 (ici précisément avec l'unité d'infrastructure 10) sont ainsi déterminées en fonction de la répartition définie par les données représentatives reçues par l'équipement utilisateur 20.

Lors de l'étape E30, le processeur 22 peut également déterminer un ensemble restreint de tranches de réseau à travers lesquelles l'équipement utilisateur 20 peut accéder au réseau de télécommunication 4. Cet ensemble restreint de tranches de réseau comprend une ou plusieurs tranche(s) de réseau de l'ensemble initial de tranches de réseau, mais n'inclut pas au moins une tranche de réseau de cet ensemble initial.

En pratique, l'équipement utilisateur 20 (ici le processeur 22) reçoit par exemple (ici en provenance de l'infrastructure utilisateur 10) des informations indiquant des consommations énergétiques respectivement associées aux tranches de réseau et sélectionne, comme tranche(s) de réseau faisant partie de l'ensemble restreint, la ou les tranche(s) de réseau (appartenant à l'ensemble initial de tranches de réseau) pour lesquelles la consommation énergétique respecte un critère déterminé (ce critère déterminé pouvant dépendre des données représentatives reçues). Les tranches de réseau de l'ensemble initial de tranches de réseau pour lesquels la consommation énergétique ne respecte pas le critère déterminé sont dans ce cas exclues de l'ensemble restreint de tranches de réseau.

En variante, la sélection des tranches de réseau par le processeur 22 pourrait être réalisée en fonction de caractéristiques de chaque tranche de réseau, ces caractéristiques pouvant être définies par exemple par la variable S-NSSAI (pour *"Single Network Slice Sélection Assistance Information"*) dans l'exemple de la norme 5G utilisée ici.

Le processeur 22 peut alors configurer le module de communication 24 de sorte que l'équipement utilisateur 20 accède au réseau de télécommunication 4 (à l'aide du module de communication 24) à travers l'une des tranches de réseau de l'ensemble restreint de tranches de réseau.

L'équipement utilisateur 20 (sous commande du processeur 22) détermine ainsi la tranche de réseau à travers laquelle cet équipement utilisateur 20 accède au réseau de télécommunication 4 en fonction de la répartition définie dans les données représentatives reçues.

Lors de l'étape E30, le processeur 22 peut également bloquer (c'est-à-dire interdire) l'utilisation de certains services fournis par l'équipement utilisateur 20 grâce à l'exécution d'instructions par le processeur 22, tel que des services liés à la vidéo (par exemple un service d'affichage d'un contenu vidéo par un afficheur de l'équipement utilisateur 20).

Lors de l'étape E30, le processeur 22 peut également restreindre l'utilisation de certains services fournis par l'équipement utilisateur 20 grâce à l'exécution d'instructions par le processeur 22, par exemple en limitant le débit de données en réception et/ou en émission.

Les services disponibles pour exécution par l'équipement utilisateur 20 (en pratique par le processeur 22) peuvent ainsi être déterminés en fonction de la répartition définie par les données représentatives reçues.

La figure 4 est un logigramme présentant un troisième exemple de procédé conforme à l'invention.

Le procédé de la figure 4 débute par une étape E50 au cours de laquelle l'équipement utilisateur 20 reçoit les données représentatives produites par le serveur 40.

Les données représentatives peuvent être transmises du serveur 40 à l'équipement utilisateur 20 à travers l'architecture 30 et l'infrastructure de gestion 2, par exemple comme décrit ci-dessus en référence aux étapes E16 à E26.

Toutefois, en variante, les données représentatives pourraient être transmises du serveur 40 à l'équipement utilisateur 20 d'une autre manière, par exemple en transitant via le réseau internet (l'équipement utilisateur 20 étant relié au réseau internet soit à travers le réseau de communication 4, soit à travers un autre système, tel qu'un réseau local ou LAN pour *"Local Area Network"*)*.*

Le procédé de la figure 4 se poursuit par une étape E52 au cours de laquelle l'équipement utilisateur 20 reçoit, par exemple en provenance d'un autre serveur 50, d'autres données représentatives d'une autre répartition, par type de source d'énergie de production, d'une puissance électrique alimentant au moins en partie un autre réseau de télécommunication que le réseau de télécommunication 4.

L'autre serveur 50 est par exemple associé à un autre fournisseur d'énergie électrique que le fournisseur d'énergie électrique 6, ou au gestionnaire d'un autre réseau électrique que le réseau électrique 8, l'autre réseau de télécommunication étant alimenté au moins en partie par l'autre fournisseur d'énergie électrique et/ou à travers l'autre réseau électrique.

Ces autres données représentatives peuvent par exemple être transmises de l'autre serveur 50 à l'équipement utilisateur 20 via le réseau internet, à travers le réseau de télécommunication 4 ou, en variante, à travers un autre système, tel qu'un réseau local ou LAN.

Le processeur 22 peut alors comparer à l'étape E54 la répartition définie par les données représentatives reçues du serveur 40 et l'autre répartition définie par les autres données représentatives, reçues de l'autre serveur 50.

Le processeur 22 effectue ainsi un test d'une condition relative non seulement à la répartition définie par les données représentatives reçues du serveur 40, mais aussi à l'autre répartition définie par les autres données représentatives.

Ce test comprend par exemple la détermination, par le processeur 22, si la part de puissance électrique provenant d'énergies fossiles (ou, en variante, d'énergies non-renouvelables) telle qu'indiquée dans les données représentatives est supérieure (strictement ou, en variante, de plus d'un nombre prédéterminé de points) à la part de puissance électrique provenant d'énergies fossiles (ou, dans la variante, d'énergies non-renouvelables) telle qu'indiquée dans les autres données représentatives.

D'autres types de test (c'est-à-dire d'autres conditions testées) peuvent être envisagés dans d'autres modes de réalisation.

La condition testée (c'est-à-dire le test) peut porter par exemple sur une comparaison entre une part de puissance électrique provenant d'énergies renouvelables telle qu'indiquée par les données représentatives et une part de puissance électrique provenant d'énergies renouvelables telle qu'indiquée par les autres données représentatives.

Dans ce cas, la condition est vérifiée par exemple lorsque la part de puissance électrique provenant d'énergies renouvelables telle qu'indiquée par les données représentatives est inférieure (strictement ou, en variante, de plus d'un nombre prédéterminé de points) à la part de puissance électrique provenant d'énergies renouvelables telle qu'indiquée par les autres données représentatives.

Le test effectué par le processeur 22 à l'étape E54 peut (chercher à) vérifier plusieurs conditions distinctes, par exemple :
- si la part de puissance électrique provenant d'énergies fossiles (ou en variante : provenant d'énergies non renouvelables) telle que définie dans les données représentatives est supérieure à un seuil prédéterminé ;
- si la part de puissance électrique provenant d'énergies fossiles (ou en variante : provenant d'énergies non renouvelables) telle qu'indiquée dans les données représentatives est supérieure (éventuellement : de plus d'un nombre prédéterminé de points) à la part de puissance électrique provenant d'énergies fossiles (dans la variante : provenant d'énergies non renouvelables) telle qu'indiquée dans les autres données représentatives.

Lorsque la condition est vérifiée (ou, si plusieurs conditions sont utilisées, lorsque les conditions sont vérifiées), le processeur 22 adapte le fonctionnement de l'équipement utilisateur 20 en commandant au module de communication 24 une connexion à l'autre réseau de télécommunication (étape E56).

En revanche, si la condition n'est pas vérifiée (ou, si plusieurs conditions sont utilisées, lorsqu'au moins une condition n'est pas vérifiée), l'équipement utilisateur 20 reste connecté au réseau de télécommunication 4 (ou, le cas échéant, par exemple lorsque les données représentatives ont été reçues via un réseau local, le processeur 22 commande au module de communication 24 une connexion au réseau de télécommunication 4).

L'équipement utilisateur 20 est alors connecté au réseau de télécommunication 4 ou à l'autre réseau de télécommunication en fonction de la répartition définie par les données représentatives et de l'autre répartition définie dans les autres données représentatives.

La figure 5 est un logigramme présentant un quatrième exemple de procédé conforme à l'invention.

Le procédé représenté à la figure 5 comprend une étape E100 de réception des données représentatives par la première unité de communication 14 de l'unité d'infrastructure 10.

Ces données représentatives ont été produites par le serveur 40, comme déjà indiqué, et peuvent par exemple être transmises à l'unité d'infrastructure 10 via l'architecture 30 et l'infrastructure de gestion 2. Le procédé comprend par exemple dans ce cas des étapes identiques aux étapes E16 à E22 préalablement à l'étape E100.

Le procédé de la figure 5 comprend alors une étape E102 de test, par l'unité d'infrastructure 10 (c'est-à-dire en pratique par le processeur 12), d'une condition relative à la répartition définie par les données représentatives reçues à l'étape E100.

Le processeur 12 détermine par exemple par cette étape de test E102 si la part de puissance électrique provenant d'énergies fossiles est supérieure à un seuil prédéterminé.

Le processeur 12 établit alors à l'étape E104 une liste de tranches de réseau selon le résultat de l'étape de test E102 et donc en fonction de la répartition définie par les données représentatives.

Par exemple, lorsque la condition est vérifiée lors de l'étape de test E102, la liste établie par le processeur 12 ne contient que des tranches de réseau dont les caractéristiques permettent une consommation électrique (consommation énergétique) réduite. Pour effectuer cette sélection des tranches de réseau présentes dans la liste, le processeur 12 utilise par exemple des caractéristiques de chaque tranche de réseau telles que définies par exemple par la variable S-NSSAI (pour *"Single Network Slice Sélection Assistance Information"*) dans l'exemple de la norme 5G utilisée ici. Ces caractéristiques peuvent être par exemple au moins une caractéristique de latence et/ou au moins une caractéristique de sécurité et/ou au moins une caractéristique de traitement d'antenne et/ou au moins une caractéristique de puissance et/ou au moins une caractéristique de mode de multiplexage (par exemple FDD pour *"Frequency Division Duplex"* ou TDD pour *"Time Division Duplex"*) et/ou au moins une caractéristique de débit (bande passante). Par exemple, lorsque la condition est vérifiée lors de l'étape de test E102, seules sont sélectionnées dans la liste les tranches de réseau ayant une latence autorisée supérieure à un seuil de latence et/ou une bande passante inférieure à un seuil de bande passante.

Comme expliqué dans la suite, les tranches de réseau de la liste sont celles que pourra utiliser l'équipement utilisateur pour sa connexion au réseau.

Le procédé de la figure 5 comprend alors une étape E106 de transmission de la liste établie à l'étape E104 depuis l'unité d'infrastructure 10 à l'équipement utilisateur 20. La liste est ici transmise au moyen de la liaison radio établie entre la seconde unité de communication 16 de l'unité d'infrastructure et le module de communication 24 de l'équipement utilisateur 20.

L'équipement utilisateur 20 reçoit la liste de tranches de réseau à l'étape E108.

L'équipement utilisateur 20 (c'est-à-dire ici le processeur 22) peut alors sélectionner une tranche de réseau parmi les tranches de réseau de la liste (étape E110).

Le processeur 22 peut alors commander au module de communication 24 d'accéder au réseau de télécommunication 4 à travers la tranche de réseau sélectionnée (étape E112). L'équipement utilisateur 20 accède ainsi au réseau de télécommunication 4 à travers la tranche de réseau sélectionnée.

Du fait que la liste a été déterminée (et restreinte dans le cas où la condition est vérifiée) par le processeur 12 de l'unité d'infrastructure 10, l'équipement utilisateur 20 ne peut choisir la tranche de réseau utilisée que dans cette liste ; la transmission de la liste à l'équipement utilisateur 20 entraîne ainsi une adaptation du fonctionnement de l'équipement utilisateur 20, ici de manière à n'utiliser que des tranches de réseau moins consommatrices d'énergie lorsque la condition relative à la répartition définie par les données représentatives est vérifiée.

## Revendications

1. Procédé mis en oeuvre dans un réseau de télécommunication (4) comprenant au moins une infrastructure de gestion (2) alimentée électriquement par au moins un fournisseur d'énergie électrique (6) à travers un réseau électrique (8), ce procédé comprenant les étapes suivantes :
- réception (E2 ; E26 ; E50 ; E100), par une unité électronique (10 ; 20) reliée au réseau de télécommunication (4), de données représentatives de la répartition, par type de source d'énergie de production, de la puissance électrique produite par le fournisseur d'énergie électrique (6) ou disponible sur le réseau électrique (8) ;
- test (E4 ; E28 ; E54 ; E102), par l'unité électronique (10 ; 20), d'au moins une condition relative à ladite répartition ;
- lorsque ladite au moins une condition est vérifiée, adaptation (E6 ; E30 ; E56 ; E110) du fonctionnement de l'unité électronique (10 ; 20) ou d'une autre unité électronique (20) reliée au réseau de télécommunication (4).

2. Procédé selon la revendication 1, dans lequel l'unité électronique est un équipement utilisateur (20) conçu pour établir une liaison radio avec le réseau de télécommunication (4), et dans lequel l'étape d'adaptation est une étape d'adaptation de l'unité électronique.

3. Procédé selon la revendication 2, comprenant les étapes suivantes :
- réception (E52), par l'unité électronique (20), d'autres données représentatives d'une autre répartition, par type de source d'énergie de production, d'une puissance électrique alimentant au moins en partie un autre réseau de télécommunication ;
- connexion (E56) de l'unité électronique (20) au réseau de télécommunication ou à l'autre réseau de télécommunication en fonction de ladite répartition et de ladite autre répartition.

4. Procédé selon la revendication 2 ou 3, dans lequel les bandes de fréquences utilisables par l'unité électronique (20) pour établir ladite liaison radio sont déterminées en fonction de ladite répartition.

5. Procédé selon l'une des revendications 2 à 4, dans lequel l'unité électronique (20) détermine la tranche de réseau à travers laquelle elle accède au réseau de télécommunication (4) en fonction de ladite répartition.

6. Procédé selon l'une des revendications 2 à 5, dans lequel la puissance d'émission maximale de l'unité électronique (20) est modifiée en fonction de ladite répartition.

7. Procédé selon l'une des revendications 2 à 6, dans lequel les services disponibles pour exécution par l'unité électronique (20) sont déterminés en fonction de ladite répartition.

8. Procédé selon l'une des revendications 2 à 7, dans lequel les données représentatives sont reçues par l'unité électronique (20) au sein d'un bloc d'informations système.

9. Procédé selon l'une des revendications 2 à 8, dans lequel l'unité électronique (20) est équipée d'un module d'identification d'abonné (26) et dans lequel le module d'identification d'abonné (26) mémorise des données indicatives de ladite au moins une condition.

10. Procédé selon la revendication 1, dans lequel l'unité électronique est une unité d'infrastructure (10) du réseau de télécommunication (4).

11. Procédé selon la revendication 10, dans lequel l'unité électronique (10) est conçue pour établir une liaison radio avec au moins un équipement utilisateur (20).

12. Procédé selon la revendication 11, comprenant les étapes suivantes :
- établissement (E104), par l'unité électronique (10) et en fonction de ladite répartition, d'une liste de tranches de réseau utilisables par l'équipement utilisateur (20) ;
- transmission (E106) de ladite liste de l'unité électronique à l'équipement utilisateur (20).

13. Procédé selon la revendication 1, dans lequel l'unité électronique (10) est conçue pour, lorsque ladite au moins une condition est vérifiée, transmettre à l'autre unité électronique (20) des données entraînant une adaptation du fonctionnement de l'autre unité électronique (20).

14. Procédé selon l'une des revendications 1 à 13, dans lequel l'adaptation comprend le report de l'exécution d'une tâche lorsque ladite au moins une condition est vérifiée.

15. Procédé selon la revendication 14, dans lequel ladite tâche est une mise à jour d'un composant logiciel de l'unité électronique (10 ; 20).

16. Procédé selon l'une des revendications 1 à 15, dans lequel l'adaptation comprend la sélection d'un algorithme prédéfini pour mettre en oeuvre une fonctionnalité donnée.

17. Procédé selon l'une des revendications 1 à 16, dans lequel l'adaptation comprend une modification de la localisation, au sein du réseau de télécommunication (4), de caches utilisés par des équipements utilisateurs reliés au réseau de télécommunication (4).

18. Procédé selon l'une des revendications 1 à 17, dans lequel ladite au moins une condition est vérifiée lorsque ladite répartition indique une part de puissance électrique provenant d'énergies fossiles supérieure à un seuil prédéterminé.

19. Procédé selon l'une des revendications 1 à 17, dans lequel ladite au moins une condition est vérifiée lorsque ladite répartition indique une part de puissance électrique d'origine éolienne supérieure à un seuil prédéterminé.

20. Procédé selon l'une des revendications 1 à 19, dans lequel lesdites données représentatives sont émises par un serveur (40) associé au fournisseur d'énergie électrique ou au réseau électrique.

21. Procédé selon l'une des revendications 1 à 20, dans lequel lesdites données représentatives sont transmises par l'intermédiaire d'une architecture de fonctionnement, d'opération et de maintenance (30) associée au réseau de télécommunication (4).

22. Procédé selon l'une des revendications 1 à 21, dans lequel lesdites données représentatives sont transmises par l'intermédiaire d'au moins une fonction (AMF) de gestion du réseau de télécommunication (4).

23. Unité électronique (10 ; 20) comprenant :
- un module de communication (14 ; 24) configuré pour établir une liaison avec un réseau de télécommunication (4) comprenant au moins une infrastructure de gestion (2) alimentée électriquement par au moins un fournisseur d'énergie électrique (6) à travers un réseau électrique (8), et pour recevoir des données représentatives de la répartition, par type de source d'énergie de production, de la puissance électrique produite par le fournisseur d'énergie électrique (6) ou disponible sur le réseau électrique (8) ; et
- un module d'adaptation (12 ; 22) configuré pour tester au moins une condition relative à ladite répartition et pour adapter, lorsque ladite au moins une condition est vérifiée, le fonctionnement de l'unité électronique (10 ; 20).

24. Unité électronique selon la revendication 23, ladite unité électronique étant un équipement utilisateur (20) et le module de communication (24) étant configuré pour établir une liaison radio avec le réseau de télécommunication (4).

25. Unité électronique (10) comprenant :
- un module de communication (14) configuré pour établir une liaison avec un réseau de télécommunication (4) comprenant au moins une infrastructure de gestion (2) alimentée électriquement par au moins un fournisseur d'énergie électrique (6) à travers un réseau électrique (8), et pour recevoir des données représentatives de la répartition, par type de source d'énergie de production, de la puissance électrique produite par le fournisseur d'énergie électrique (6) ou disponible sur le réseau électrique (8) ; et
- un module d'adaptation (12) configuré pour tester au moins une condition relative à ladite répartition et pour commander, lorsque ladite au moins une condition est vérifiée, la transmission, à une autre unité électronique (20) reliée au réseau de télécommunication (4), de données entraînant une adaptation du fonctionnement de cette autre unité électronique (20).
